# EUROPÄISCHE PATENTANMELDUNG

(11) **EP 4 650 709 A1**
(43) Veröffentlichungstag der Anmeldung: **19.11.2025**
(21) Anmeldenummer: 24176497.6
(22) Anmeldetag: 17.05.2024
(51) Int. Cl.: G01B 11/16

(54) **SENSOREINHEIT, SENSORSYSTEM UND MANIPULATOR**

(71) Anmelder: Gottfried Wilhelm Leibniz Universität Hannover, 30167 Hannover (DE)
(72) Erfinder: Biermann, Tobias Christian, 30449 Hannover (DE); Eckert, Jan Gerrit, 30419 Hannover (DE); Wolf, Alexander Gordon, 30900 Wedemark (DE)
(74) Vertreter: Weidner Stern Jeschke

(57) **Zusammenfassung**

Die Erfindung betrifft eine Sensoreinheit, ein Sensorsystem und einen Manipulator. Die Sensoreinheit zum Ermitteln einer ersten, im Wesentlichen eindimensionalen Krümmung eines Objektes, weist eine Lichtleiterstruktur mit zumindest einem ersten Leitungsbereich, welcher an einer ersten Position eine Lichtquelle, welche eine Anregungsstrahlung in den ersten Leitungsbereich induziert, und an einer zweiten Position eine wellenlängensensitive Messeinheit aufweist, und einem an dem ersten Leitungsbereich zumindest anliegenden, zweiten Leitungsbereich, welcher ein wellenlängenveränderndes Material aufweist, wobei der erste Leitungsbereich und/oder der zweite Leitungsbereich dem Objekt physisch kontaktierend zugeordneten ist oder sind, wobei die wellenlängensensitive Messeinheit sensordatenaustauschend mit einer Auswerteeinheit verbunden ist, wobei die wellenlängensensitive Messeinheit bei einer ersten Krümmung des Objektes ein erstes Spektrum detektiert, welches einen ersten Anteil der Anregungsstrahlung und einen zweiten Anteil einer, in Abhängigkeit der ersten Krümmung und der Anregungsstrahlung, durch das wellenlängenveränderndes Material emittierten Emissionsstrahlung aufweist, sodass mittels der Auswerteeinheit unter Berücksichtigung der Anregungsstrahlung und des ersten Spektrums die erste Krümmung des Objektes ermittelbar ist.

## Beschreibung

Die Erfindung betrifft eine Sensoreinheit, ein Sensorsystem und einen Manipulator.

Im technischen Bereich gibt es eine Vielzahl Anwendungen, welche eine Verformungsmessung an einer Oberfläche eines Objektes erfordern. Derartige Verformungsmessungen sind zum Beispiel für die Zustandsüberwachung (Kelb, C.; Rahlves, M.; Reithmeier, E.; Roth, B. Realization and Performance of an All-Polymer Optical Planar Deformation Sensor. IEEE Sensors J 2015, 15, 7029- 7035), zur Rückmeldung der Bewegungen von Robotern, insbesondere Softrobotern und weitere Anwendungen wichtig.

Es werden immer häufiger Roboter zur Unterstützung von manuell durchgeführten Arbeitsprozessen eingesetzt. Hierbei kommt es zur häufig zur Interaktion zwischen dem Menschen, auch Werker genannt, und Maschine, hier Roboter, zumindest aber arbeiten Mensch und Maschine häufig in einem gemeinsamen Arbeitsraum. Es sind verschiedene Verfahren zur Erhöhung der Sicherheit des Werkers bekannt, wie eine Verringerung der Arbeitsgeschwindigkeit des Roboters. Derartige Systeme können zusätzlich mit einer Berührungsempfindlichkeit ausgestattet sein (Banerjee, S.S.; Arief, 1.; Berthold, R.; Wiese, M.; Bartholdt, M.; Ganguli, D.; Mitra, S.; Mandal, S.; Wallaschek, J.; Raatz, A.; Heinrich, G.; Das, A. Superelastic ultrasoft natural rubber-based piezoresistive sensors for active sensing interface embedded on soft robotic actuator. Applied Materials Today 2021, 25, 101219).

Softroboter wurden zur Verwendung in gemeinschaftlich mit einem Werker genutzten Arbeitsräumen konzipiert und weisen zumeist zumindest an ihrer Oberfläche weiche Materialien, wie Silikon oder Schaumstoff, auf. Zudem ist die Beweglichkeit bei Softrobotern häufig nicht mittels Gelenk-Achse-Prinzip gelöst, sondern mittels einer Verformbarkeit des gesamten Systems. Somit weisen Softroboter große elastische Verformungen auf und können eine Vielzahl Positionen und Stellungen einnehmen. Aufgrund eines geringen Eigengewichtes und des Verformungsprinzips sind die auftretenden Kräfte deutlich geringer als bei Standardrobotern. Dies geht insbesondere auch mit einem verringerten Gefahrenpotenzial für den Werker einher. Gleichwohl können Softroboter gleiche oder ähnliche Aufgaben, insbesondere mittels eines Manipulators, erfüllen, wie ein Standardroboter, insbesondere ein Standardindustrieroboter oder dergleichen.

Zur Positionsbestimmung des Körpers eines Softroboters bedürfen entsprechende Systeme einer Verformungsmessung an ihrer Oberfläche, da die Positionierung der Elemente des Softroboters nicht aus einer Positionsbestimmung von Gelenken zueinander ableitbar ist.

Es sind Systeme zur Verformungsmessung bekannt, welche elektrische und/oder optische Sensoren verwenden (vgl. DOI: 10.1002/adma.201400334. Dabei haben optische Systeme den Nachteil, dass Umgebungsbedingungen, wie Staub oder externe Strahlungsquellen, leicht zu Fehlmessungen führen können (Schneider, D.; Shrotri, A.; Flatt, H.; Stübbe, O.; Wolf, A.; Lachmayer, R.; B\jnge, C.-A. Impact of industrial environments on visible light communication. Opt. Exp. 2021 29, 16087-16104. 4. Campanella, C.E.; Cuccovillo, A.; Campanella, C.; Yurt, A.; Passaro, V.M.N. Fibre Bragg Grating Based Strain Sensors: Review of Technology and Applications. Sensors 2018, 18, 3115).

Als optische Sensorsysteme zur Erfassung von Verformungen werden beispielsweise Remote-Imaging- und/oder Fasersensoren eingesetzt. Fasersensoren werden im Stand der Technik direkt auf das Messobjekt aufgebracht oder in dieses integriert. Eine etablierte Lösung sind Faser-Bragg-Gitter (Campanella, C.E.; Cuccovillo, A.; Campanella, C.; Yurt, A.; Passaro, V.M.N. Fibre Bragg Grating Based Strain Sensors: Review of Technology and Applications. Sensors 2018, 18, 3115). Derartige Faser-Bragg-Gitter erfordern eine komplexe wellenlängenaufgelöste Auswertung eines Messsignals. Die meisten Faser-Bragg-Gitter sind in Glasfasern eingeschrieben. Sie können alternativ auch mit Polymeren realisiert sein (Luo, Y.; Yan, B.; Zhang, Q.; Peng, G.-D.; Wen, J.; Zhang, J. Fabrication of Polymer Optical Fibre (POF) Gratings. Sensors 2017, 17, 511). Insbesondere bei polymerbasierten Faser-Bragg-Gittern sind erhebliche Dehnungen der Faser möglich (Peters, K. Polymer optical fiber sensors-a review. Smart Mater. Struct. 2011, 20, 013002).

Die Ablenkung eines Laserstrahls mittels Totalreflexion in einer Faser mit prismatischem Querschnitt kann darüber hinaus zur Messung der Verformung verwendet werden (Wolf, A. lntegrated Optical Deformation Measurement with TIR Prism Rads. Sensors 2023, 23, 943). Auch andere Fasersensorsysteme basieren auf der internen Totalreflexion. Dabei koppelt eine Strahlungsquelle mit einem bestimmten Emissionswinkel Strahlen in eine Multimode-Faser ein. Durch die Biegung der Multimode-Faser erhöht sich die Anzahl der aus der Faser ausgekoppelten Strahlen, wodurch die Signalintensität an einem gegenüberliegenden Ende der Faser abnimmt (Kuang, K.S.C.; Cantwell, W.J.; Scully, P.J. An evaluation of a novel plastic optical fibre sensor, for axial strain and bend measurements, Meas. Sei. Technol. 2002, 13 1523-i534) . Da der Messwert der Prozentsatz der Photonen, welche nicht aus der Faser ausgekoppelt werden, ist, ist eine genaue Kenntnis des eingekoppelten Strahlungsflusses erforderlich.

In dem Artikel "Identification of the sensory properties of image-based multi-axis force/torque sensors" in Sensoren und Messysteme 2022 von N. Al-Baradoni et al. wird ein optisches Lösungsprinzip vorgestellt, welches ein bildgebendes Funktionsprinzip verwendet. Darüber hinaus wird in dem Artikel "Recent Advances of Tendencies Regarding Fiber Optic Sensors for Deformation Measurement: A Review" in IEEE Sensors Journal, Vol. 22 No.4 2022 von T. Li et al. eine Übersicht über bekannte Messprinzipien gegeben.

Zur Messung von Verformungen an Softroboteroberflächen wurde zudem der Einsatz von Sensorfolien oder Fasern aus elastischem Material, beispielsweise Silikon untersucht (z.B. im SFB/TRR 123, [Kelb, C.; Rahlves, M.; Reithmeier, E.; Roth, B. Realization and Performance of an All-PolymerOptical Planar Deformation Sensor. IEEE Sensors J 2015, 15, 7029-7035, Xiao, Y.; Hofmann, M.; Zappe, H. Design and simulation of integrated optical interferometers fabricated in polymerfoils. In Proc. SP IE 9365, lntegrated Optics: Devices, Materials, and Technologies, San Francisco, United States, 7-12 February 2015., Wolfer, T.; Bollgruen, P.; Mager, D.; Overmeyer, L.; Korvink, J.G. Printing and preparation of integrated optical wave-guides for optronic sensor networks. Mechatronics 2016, 34, 119;127.] Wesentlicher Nachteil des Einsatzes von Sensorfolien ist die komplexe Integration der Folien an dem Messobjekt sowie die mehrachsige Verformung der Folien bei einer Verformung des Untersuchungsobjektes.

Darüber hinaus offenbart die DE 10 2018 122 510 A1 einen optischen Sensor, umfassend zumindest eine Lichtquelle, die Anregungslicht in Richtung zumindest einer ersten Sensorschicht abstrahlt; zumindest eine erste Sensorschicht, wobei die erste Sensorschicht in Kontakt mit einem Medium bringbar ist, wobei die erste Sensorschicht in Abhängigkeit vom eintreffenden Anregungslicht und einer Konzentration einer Messgröße des Mediums Emissionslicht emittiert; zumindest ein Empfänger, der das Emissionslicht empfängt und in ein Empfangssignal umwandelt, wobei aus dem Emissionslicht ein Messwert für die Messgröße erzeugbar ist; einen ersten Lichtleiter, der Anregungslicht von der Lichtquelle auf einen ersten Bereich der ersten Sensorschicht leitet und Emissionslicht vom ersten Bereich der Sensorschicht zum Empfänger leitet; und einen, vom ersten Lichtleiter unabhängigen, zweiten Lichtleiter, der Anregungslicht von der Lichtquelle auf einen zweiten Bereich der ersten Sensorschicht leitet und Emissionslicht vom zweiten Bereich der Sensorschicht zum Empfänger leitet. Der offenbarte optische Sensor ist nachteilig nicht zur Messung einer Verformung eingerichtet und somit nicht für die Positionsbestimmung für Softroboter nutzbar.

Der bekannte Stand der Technik weist den Nachteil auf, dass kein Sensorsystem bekannt ist, welches einfach anzuordnen ist, möglichst resilient gegenüber Umwelteinflüssen ist und eingerichtet ist, eine im Wesentlichen linienförmige und/oder flächige Verformung eines Körpers zu ermitteln.

Aufgabe der Erfindung ist es, den Stand der Technik zu verbessern.
Gelöst wird die Aufgabe durch eine Sensoreinheit zum Ermitteln einer ersten, im Wesentlichen eindimensionalen Krümmung eines Objektes, aufweisend eine Lichtleiterstruktur mit zumindest einem ersten Leitungsbereich, welcher an einer ersten Position eine Lichtquelle, welche eine Anregungsstrahlung in den ersten Leitungsbereich induziert, und an einer zweiten Position eine wellenlängensensitive Messeinheit aufweist, und einem an dem ersten Leitungsbereich zumindest anliegenden, zweiten Leitungsbereich, welcher ein wellenlängenveränderndes Material aufweist, wobei der erste Leitungsbereich und/oder der zweite Leitungsbereich dem Objekt physisch kontaktierend zugeordneten ist oder sind, wobei die wellenlängensensitive Messeinheit sensordatenaustauschend mit einer Auswerteeinheit verbunden ist, wobei die wellenlängensensitive Messeinheit bei einer ersten Krümmung des Objektes ein erstes Spektrum detektiert, welches einen ersten Anteil der Anregungsstrahlung und einen zweiten Anteil einer, in Abhängigkeit der ersten Krümmung und der Anregungsstrahlung, durch das wellenlängenverändernde Material emittierter Emissionsstrahlung aufweist, sodass mittels der Auswerteeinheit unter Berücksichtigung der Anregungsstrahlung und des ersten Spektrums die erste Krümmung des Objektes ermittelbar ist.

Vorteilhafterweise kann mittels der Sensoreinheit eine Verformung eines insbesondere großflächigen Objektes (wie Roboter, Windkraftanlagenbauteil wie Turm oder Rotorblatt, Tragfläche oder ähnliches insbesondere Bauteile aus einem Faserverbundwerkstoff) ermittelt werden. Die über die Fläche integrierte Messung der Verformung kann vorteilhafterweise für eine Positionsbestimmung eines Softroboters, welcher mittels einer verformbaren Struktur realisiert ist, verwendet werden. Zudem ist mittels der Vorrichtung vorteilhafterweise eine einfache integrierte Deformationsmessung umsetzbar. Die Sensoreinheit realisiert vorteilhafterweise eine preisgünstige Sensorik. Weiter vorteilhafterweise ist eine Messqualität unter Verwendung des erfindungsgemäßen Sensorsystems sehr wenig anfällig gegenüber Umwelteinflüssen, insbesondere gegenüber Staub. Schließlich erfordert die Auswertung der Messdaten zur Positionsbestimmung eine relativ geringe Komplexität der programmtechnischen Realisierung.

Ein wesentlicher Gedanke beruht insbesondere darauf, dass eine Verformung, insbesondere ein Verformungsgrad, einer Oberfläche mittels einer an der Oberfläche angeordneten Sensoreinheit ermittelbar ist, welche eine Messgröße in Abhängigkeit einer Eingangsgröße und korrespondierend zu einer Verformung ausgibt, welche den Verformungsgrad repräsentiert.

### Folgendes Begriffliche sei erläutert:

Unter einer "Krümmung eines Objektes" wird insbesondere eine Verformung, auch Auslenkung genannt, einer Oberfläche verstanden. Die Krümmung kann mittels eines Auslenkungswinkels beschrieben werden. Der Auslenkungswinkel kann 0 Grad bis 180 Grad, insbesondere 0 Grad bis 30 Grad betragen. Eine eindimensionale Krümmung ist insbesondere linienförmig vorliegend. Eine mehrdimensionale Krümmung liegt insbesondere bei einer Verformung einer Fläche vor.

Ein erster Leitungsbereich, auch erster Lichtleiter, Referenzleiter, Messleiter, Wellenleiter oder erste optische Faser genannt, weist insbesondere Multimode-Fasern und/oder auf. Eine Herstellung einer entsprechenden optischen Faser aus Silikon kann mittels additiver Fertigungsverfahren realisiert sein (vgl. Biermann, T.; Grabe, T.; Ley, P-P.; Hüchting, J.; Lachmayer, R. Potentials and challenges of additive manufacturing using highly transparent silicone materials. Bremen, Germany, 2-6 June 2020). Alternativ kann eine Herstellung mittels eines Gießverfahrens erfolgen und/oder mittels Strangextrudieren.

Es können transparente Silikone verwendet werden, welchen zusätzlich oder alternativ ferromagnetische Nanopartikeln zugegeben sein können, welche durch ein externes Magnetfeld beeinflusst werden können (vgl. Biermann, T.; Ziebehl, A.; Grabe, T.; Röttger, J.; Ley, P-P.; Wolf, A.; Lachmayer, R. Magnetically actuated solid body PDMS lens. In Proc. SPIE 11682, Optical Components and Materials XVIII, onl_ine, 6-12 March 2021.).

Zusätzlich oder alternativ können dem Silikon Nanopartikel mit einer lokal variablen Konzentration beigemengt sein, welche eine vordefinierte Sensorfunktion realisieren. Derartige Nanopartikel werden von einer eingekoppelten Strahlung angeregt und arbeiten derart als photonische Up- und/oder Down-Converter, auch wellenlängenveränderndes Material genannt. Eine Nanopartikelkonzentration kann für jedes Voxel mithilfe additiver Fertigungstechnologien realisiert werden (vgl. Ziebehl, A.; Biermann, T.; Grabe, T.; Röttger, J.; Ley, P-P.; Wolf, A.; Lachmayer, R. Potentials and Challenges in Additive Manufacturing of Nanoparticle-infused Silicone Optics. In Proceedings of the DGaO 2020, Bremen, Germany, 21-23 September 2020.).

Eine Länge des ersten Leitungsbereichs kann 2 cm bis 50 m betragen. Auch eine Ausführung mit einer größeren Länge ist vorstellbar. Der Querschnitt des ersten Lichtleiters ist insbesondere rund und beträgt insbesondere 0,05 cm bis 2 cm, insbesondere 0,5 bis 1 cm. Alternativ kann der Querschnitt hexagonal, oval und/oder dreieckig sein. Weitere geometrische Ausgestaltungen sind möglich und liegen im Gestaltungsbereich eines Fachmanns. An den Stirnflächen des ersten Leitungsbereichs liegen die Faserenden offen vor, sodass eine Lichtstrahlung in den ersten Leitungsbereich, insbesondere in zumindest eine darin angeordnete Faser, induzierbar ist. Ein entsprechender erster Leitungsbereich ist vorteilhafterweise einfach herstellbar. Vorteilhafterweise realisiert ein runder Querschnitt eine optimierte Führung der Strahlung insbesondere entlang einer Längserstreckung des ersten Leitungsbereichs.

Merkmale eines zweiten Leitungsbereichs können im Wesentlichen dem Aufbau des ersten Leitungsbereich entsprechen, wobei der zweite Leitungsbereich im Wesentlichen frei von einer unmittelbar an dem zweiten Leitungsbereich angeordneten Lichtquelle und/oder wellenlängensensitiven Messeinheit ist. In einer Ausführungsform ist die wellenlängensensitive Messeinheit an dem zweiten Leitungsbereich angeordnet.

Auch eine Länge des zweiten Leitungsbereichs und/oder ein Querschnitt des zweiten Leitungsbereichs kann den Ausgestaltungen des ersten Leitungsbereichs entsprechen. Zur Vermeidung von Wiederholungen wird auf die vorstehenden Ausführungen verwiesen.

In dem zweiten Leitungsbereich liegt zusätzlich zu den Merkmalen des ersten Lichtleiters insbesondere ein wellenlängenveränderndes Material vor, welches durch eine Anregungsstrahlung zur Emittierung eines Lichtes anregbar ist. Materialeigenschaften des zweiten Leitungsbereichs können insbesondere voxelweise durch die gewählten Fertigungsparameter und/oder das verwendete Material eingestellt werden, um derart eine gewünschte Sensorfunktionalität zu realisieren (vgl. Lehmhus, D.; Aumund-Kopp, C.; Petzoldt, F.; Godlinski, D.; Haberkorn, A.; Zöllmer, V.; Busse, M. Customized Smartness: A Survey on Links between Additive Manufacturing and Sensor Integration. Procedia Technology 2016, 26, 284-301. und Maiwald, M.; Werner, C.; Zoe llmer, V.; Busse, M. INKtelligent printed strain gauges. Sensors and Actuators A 2010, 162, 198-201.).

Das wellenlängenverändernde Material ist insbesondere photolumineszierend und/oder fluoreszierend. Zusätzlich oder alternativ kann das wellenlängenverändernde Material einen organischen Farbstoff und/oder zumindest einen Quantenpunkt, insbesondere zumindest einen Nanopartikel mit konvertierenden, insbesondere fluoreszierenden, Eigenschaften aufweisen. Der zweite Leitungsbereich kann entlang seiner Längserstreckung unterschiedliche Konzentrationen des wellenlängenverändernden Materials aufweisen. Derart kann eine positionsabhängige Sensitivität entlang einer Lichtausbreitungsrichtung der Anregungsstrahlung durch Änderung der Querschnittsfläche des Leitungsbereiches und/oder der Partikelkonzentration beziehungsweise deren lokaler Anordnung modifizierbar sein.

Das wellenlängenverändernde Material kann in einer Ausführungsform im Wesentlichen konstant gleichverteilt im zweiten Leitungsbereich vorliegen. Das wellenlängenverändernde Material wird derart von der Wellenlänge der Lichtquelle zur Emission von Strahlung einer anderen Wellenlänge angeregt. Zusätzlich oder alternativ kann das Faservolumen positionsabhängig fluoreszierend ausgeführt sein. Eine positionsabhängige Fluoreszenz des wellenlängenverändernden Materials kann mittels ortsabhängig unterschiedlicher Konzentration an fluoreszierenden Nanopartikeln in die Faser ausgeführt sein. Vorteilhafterweise realisiert die erfindungsgemäße Sensoreinheit eine Ermittlung einer Verformung eines Objektes insbesondere entlang einer Linie mittels eines einfachen Aufbaus.

Eine Lichtleiterstruktur, weist insbesondere den ersten Leitungsbereich und den zweiten Leitungsbereich auf. Die Lichtleiterstruktur kann einteilig hergestellt sein. Zusätzlich oder alternativ kann der erste Leitungsbereich und der zweite Leitungsbereich hergestellt und die Lichtleiterstruktur mittels Anordnens des ersten Leitungsbereich an dem zweiten Leitungsbereich, insbesondere unter Verwendung einer klebtechnischen Verbindung, hergestellt sein. Vorteilhafterweise ist eine optimierte Herstellbarkeit mittels einer einteilig hergestellten Lichtleiterstruktur realisiert.

Somit realisiert der erste Leitungsbereich der Lichtleiterstruktur mit anderen Worten insbesondere einen Referenzleiter und der zweite Leitungsbereich mit anderen Worten einen krümmungssensitiven Suggestionsleiter.

Der erste Leitungsbereich liegt insbesondere an einer Überdeckungslinie, auch Kontaktlinie genannt, oder einer Überdeckungsfläche an dem zweiten Lichtleiter an. Die Längserstreckungen des ersten und zweiten Leitungsbereichs sind mit anderen Worten im Wesentlichen parallel zueinander angeordnet. An der Überdeckungslinie oder Überdeckungsfläche des ersten Leitungsbereich mit dem zweiten Leitungsbereich gehen die im Wesentlichen runden Querschnitte mit anderen Worten ineinander über. Der erste Leitungsbereich liegt insbesondere derart an dem zweiten Leitungsbereich an, dass eine in den ersten Leitungsbereich induzierte Anregungsstrahlung sich von dem ersten Leitungsbereich über die Kontaktlinie in den zweiten Leitungsbereich ausbreitet.

Die "Lichtquelle" sendet insbesondere kohärentes Licht in einem vordefinieren Wellenlängenspektrum, welches insbesondere 200 nm bis 2.000 nm beträgt aus und realisiert derart die Anregungsstrahlung. Die Lichtquelle kann eine Punktlaserquelle, eine fasergekoppelte Laserdiode und/oder eine fasergekoppelte LED sein. Die Lichtquelle koppelt die Anregungsstrahlung insbesondere an einer ersten Position in den ersten Leitungsbereich ein. Die erste Position kann an einer ersten Stirnfläche des ersten Leitungsbereichs vorliegen. Zusätzlich oder alternativ kann die erste Position an einer Mantelfläche des ersten Leitungsbereichs angeordnet sein. Die Lichtquelle weist einen Anschluss zur Versorgung mit elektrischer Energie auf und wandelt diese insbesondere in die in den ersten Leitungsbereich initiierte Anregungsstrahlung um.

Die Lichtleiterstruktur umfasst zumindest den ersten Leitungsbereich und den zweiten Leitungsbereich. Zusätzlich oder alternativ kann die Lichtleiterstruktur weitere Leitungsbereiche aufweisen, welche zumindest an dem ersten Leitungsbereich anliegen und insbesondere korrespondierend zu den obenstehenden Ausführungen zu dem zweiten Leitungsbereich ausgeführt sind. Vorteilhafterweise ist durch die Ausführung der Lichtleiterstruktur mit einem ersten Leitungsbereich, einem an dem ersten Leitungsbereich angeordneten zweiten Leitungsbereich mit einem wellenlängenverändernden Material und einem an dem ersten Leitungsbereich angeordneten dritten Leitungsbereich mit einem wellenlängenverändernden Material mittels genau einer Lichtleiterstruktur eine Detektion einer flächige Verformung eines die Lichtleiterstruktur kontaktierend zugeordneten Objektes realisierbar.

Eine erste Länge eines ersten Leitungsbereich kann alternativ verschieden zu einer zweiten Länge eines zweiten Leitungsbereich und/oder zu einer dritten Länge eines dritten Leitungsbereiches sein. Zusätzlich kann ein Anlagebereich des zweiten Leitungsbereiches an dem ersten Leitungsbereich unterschiedlich zu einem Anlagebereich des dritten Leitungsbereiches an dem ersten Leitungsbereich sein. Mit anderen Worten kann entlang der Längserstreckung des ersten Leitungsbereichs in einem ersten Bereich nur einer der zweiten und dritten Leitungsbereiche, keiner der zweiten und dritten Leitungsbereiche und/oder beide der zweiten und dritten Leitungsbereiche angeordnet sein. Da eine partielle Verformung das wellenlängenändernde Material des oder der in dem jeweiligen Bereich an dem ersten Leitungsbereich anliegenden ersten und/oder zweiten Leitungsbereiche beeinflusst, kann derart vorteilhafterweise eine Position und/oder ein Bereich bestimmt werden, in welchem eine aktuelle Verformung des Objektes vorliegt.

Der erste Leitungsbereich und/oder der zweite Leitungsbereich sind dem Objekt, auch Messobjekt oder Oberfläche genannt, kontaktierend zugeordnet. Mit anderen Worten liegt der erste Leitungsbereich und/oder der zweite Leitungsbereich physisch kontaktierend an dem Objekt an. Die Lichtleiterstruktur ist insbesondere geradlinig an dem Objekt angeordnet. Zusätzlich oder alternativ kann die Lichtleiterstruktur entlang einer gebogenen Linie an dem Objekt angeordnet sein. Schließlich kann die Lichtleiterstruktur spiralförmig an dem Objekt angeordnet sein und es derart mit anderen Worten umwickeln. Die Anlegefläche oder Anlagelinie ist insbesondere vordefiniert und/oder bekannt, da derart vorteilhafterweise unter Verwendung eines digitalen Modelles eine Verformung des Objektes anhand der Messdaten des Sensors ermittelbar ist. Die Auswertung kann unter Verwendung von Algorithmen, insbesondere auch selbstlernender Algorithmen, erfolgen.

In Abhängigkeit einer Krümmung des Objektes wird die anliegende Lichtleiterstruktur, nämlich der erste Leitungsbereich und/oder der zweite Leitungsbereich, folglich verformt. In der Folge wird die Anregungsstrahlung durch die Auslenkung der Lichtleiterstruktur, von dem in dem zweiten Leitungsbereich vorliegenden wellenlängenverändernden Material in einer anderen Weise absorbiert und in einer höheren oder niedrigeren Wellenlänge emittiert, als ohne die Krümmung des Objektes. Derart kann vorteilhafterweise eine Krümmung des Objektes anhand des detektierbaren Spektrums, welches zumindest die Anregungsstrahlung und die Essmissionsstrahlung umfasst, ermittelt werden.

Unter einem "Spektrum" wird ein erster Anteil an emittierter Strahlung und ein zweiter Anteil emittierter Strahlung in Abhängigkeit zu einer Anregungsstrahlung verstanden. Das Spektrum korreliert insbesondere mit einer Krümmung der Lichtleiterstruktur, welche bei einer erfindungsgemäßen Sensoreinheit insbesondere durch eine Krümmung des Objektes induziert ist. Das Spektrum liegt insbesondere im Querschnitt der Lichtleiterstruktur von.

Die "wellenlängensensitive Messeinheit" ist insbesondere lichtdetektierend und/oder an einer der ersten Stirnfläche, an welcher insbesondere die Lichtquelle angeordnet ist, gegenüberliegend angeordneten zweiten Stirnfläche des ersten Leitungsbereichs als zweite Position angeordnet. Zusätzlich oder alternativ kann die zweite Position an einer Mantelfläche des ersten Leitungsbereichs angeordnet sein. Derart ist vorteilhafterweise die Anregungsstrahlung an einer ersten Stirnfläche des ersten Leitungsbereichs eingegeben und die wellenlängensensitive Messeinheit an einer zweiten Stirnfläche des ersten Leitungsbereichs angeordnet. Vorteilhafterweise kann derart der Messaufbau der Sensoreinheit einfach umgesetzt werden. Zusätzlich kann vorteilhafterweise eine Vielzahl Sensoreinheiten derart zu einem Sensorsystem zusammengebracht werden, ohne dass sie einander physisch bedrängen. Zusätzlich oder alternativ kann die zweite Position an einer Stirnfläche und/oder einer Mantelfläche eines zweiten Leitungsbereiches angeordnet sein.

In einer Ausführungsform ist die wellenlängensensitive Messeinheit, auch lichtdetektierende Messeinheit genannt, spektralauflösend. Zusätzlich oder alternativ ist die wellenlängensensitive Messeinheit insbesondere als Monochromator, CCD-Kamera und/oder zumindest eine Photodiode ausgeführt. Bei einer Ausführung unter Verwendung einer Photodiode verfügt diese über zwei getrennt voneinander auswertbare Bereiche und/oder realisiert eine Auswertung zumindest einer ersten und einer zweiten Eindringtiefe der Photonen wie ein Mutlilayer-Sensor oder ein Foyeon-Sensor. Vorteilhafterweise realisiert die Ausführung der wellenlängensensitiven Messeinheit einen kostengünstigen Herstellungspreis einer erfindungsgemäßen Sensoreinheit.

In einer weiteren Ausführungsform ist die von der Lichtquelle ausgesendete Anregungsstrahlung kohärent. Die Kohärenz kann insbesondere nach einer vordefinierten Strahlungslänge in dem ersten Leitungsbereich vorliegen. Zusätzlich oder alternativ weist die von der Lichtquelle ausgesendete Anregungsstrahlung eine vordefinierte Wellenlänge, insbesondere eine Wellenlänge von 200 nm bis 2.000 nm, insbesondere 400 nm bis 800 nm, auf. Vorteilhafterweise kann zur Realisierung einer vorgenannten Wellenlänge ein handelsübliches Leuchtmittel verwendet werden, was geringe Herstellkosten realisiert.

In einer Ausführungsform weist der erste Leitungsbereich und/oder der zweite Leitungsbereich zumindest eine Faser auf. Die zumindest eine Faser kann als ein einziger Faserstrang realisiert sein. Zusätzlich oder alternativ kann die zumindest eine Faser in einer Faserstranganordnung vorliegen. Die Faserstranganordnung kann eine Mehrzahl Faserstränge aufweisen. Die Mehrzahl Faserstränge können parallel zueinander angeordnet sein. Zusätzlich oder alternativ können die Mehrzahl Faserstränge in einer Schicht angeordnet sein. Schließlich können die Mehrzahl Faserstränge in einer Matrix angeordnet sein. Vorteilhafterweise realisiert die Anordnung der Faserstränge eine optimierte Messung des Auslenkungswinkels.

Der erste Leitungsbereich und/oder der zweite Leitungsbereich weisen in einer Ausführungsform einen makroskopisch deformierbaren und/oder transparenten Werkstoff auf. Der transparente Werkstoff kann insbesondere Silikon aufweisen. Vorteilhafterweise ist durch einen entsprechenden Werkstoff eine optimierte Lichtführung in den Leitungsbereichen realisiert. Zusätzlich vorteilhafterweise ist eine Herstellung eines Leitungsbereichs, welcher auf Silikon basiert, bekannt und eine entsprechende Einstellbarkeit einer positionsabhängigen Fluoreszenz im Stand der Technik beschrieben.

In einer Ausführungsform ist die jeweilige Längserstreckung des ersten Leitungsbereichs und/oder des zweiten Leitungsbereichs deutlich größer als eine jeweilige Quererstreckung.

Die wellenlängensensitive Messeinheit ist in einer Ausführungsform eingerichtet, bei einer zweiten Auslenkung des Objektes ein zweites Spektrum zu detektieren. Das zweite Spektrum weist insbesondere einen vierten Anteil einer in Abhängigkeit der zweiten Krümmung des Objektes durch das wellenlängenverändernde Material emittierten Emissionsstrahlung auf, sodass die wellenlängensensitive Messeinheit drei Spektren detektiert. Mit anderen Worten kann mittels der Auswerteeinheit unter Berücksichtigung der jeweiligen Anregungsstrahlung und des jeweiligen mittels der wellenlängensensitiven Messeinheit gemessenen Spektrums eine jeweilige Krümmung des Objektes festgestellt werden. Vorteilhafterweise ist derart eine stufenlose Feststellung einer Krümmung des Objektes realisierbar.

Die Auswerteeinheit kann kabelgebunden und/oder funktechnisch zur Realisierung der sensordatenaustauschenden Verbindung mit der wellenlängensensitiven Messeinheit verbunden sein. Die wellenlängensensitive Messeinheit übermittelt insbesondere ein Messignal an die Auswerteeinheit, wobei das Messignal insbesondere das aktuell gemessene Spektrum repräsentiert. Die Auswerteeinheit kann einen Dateneingang, einen Datenausgang, Speicher und/oder Funktionselemente zur Realisierung einer Auswertung aufweisen. Zur Auswertung des empfangenen Messsignals kann die Auswerteeinheit insbesondere programmtechnisch hinterlegte Algorithmen aufweisen. Dabei können zusätzlich oder ergänzend selbstlernende Algorithmen vorliegen. Zusätzlich oder alternativ kann die Auswerteeinheit mittels künstlicher Intelligenz eingerichtet sein, anhand von vorherigen Messungen eine zukünftige Messung zu optimieren.

Unter einer "Sensoreinheit" wird ein Messsystem verstanden, welches eine Mehrzahl Elemente umfasst und zur Ermittlung von Messdaten eingerichtet ist. Die erfindungsgemäße Sensoreinheit weist insbesondere eine Lichtleiterstruktur mit zumindest einem ersten Leitungsbereich mit einer an einer ersten Position angeordneten Lichtquelle und einer an einer zweiten Position angeordneten wellenlängensensitiven Messeinheit, welche sensordatenaustauschend mit einer Auswerteeinheit verbunden ist, und einen an dem ersten Leitungsbereich zumindest anliegenden zweiten Leitungsbereich mit einem wellenlängenverändernden Material auf. Die Sensoreinheit ist einem Messobjekt mittels des zumindest ersten Leitungsbereich und/oder mittels des zweiten Leitungsbereichs physisch kontaktierend zugeordneten. Die Sensoreinheit kann mit weiteren Sensoreinheiten zu einem Sensorsystem verbindbar sein.

In einem weiteren Aspekt wird die Aufgabe gelöst durch ein Sensorsystem zum Ermitteln einer mehrdimensionalen Krümmung eines Objektes, aufweisend eine in einer ersten Orientierung an dem Objekt kontaktierend angeordnete erste erfindungsgemäße Sensoreinheit und in einer zweiten Orientierung an dem Objekt kontaktierend angeordnete zweite erfindungsgemäße Sensoreinheit. Darüber hinaus weist das Sensorsystem eine Auswerteeinheit auf, welche sensordatenaustauschend mit der ersten Sensoreinheit und der zweiten Sensoreinheit verbunden ist, wobei die Auswerteeinheit dazu eingerichtet ist, die mehrdimensionale Krümmung des Objektes anhand der für die erste Orientierung von der ersten Sensoreinheit ermittelten ersten Krümmung des Objektes und der für die zweite Orientierung von der zweiten Sensoreinheit ermittelten zweiten Krümmung des Objektes abzuleiten.

Vorteilhafterweise kann mittels des erfindungsgemäßen Sensorsystems eine flächige Krümmung des Objektes ermittelt werden.

Die Merkmale des Aspektes sowie die Vorteile entsprechend den Merkmalen und Vorteilen des erstgenannten Erfindungsaspektes.

In einem weiteren Aspekt wird die Aufgabe gelöst durch einen Manipulator mit zumindest einem ersten, gegenüber einem zweiten Oberflächenbereich beweglich angeordneten, ersten Oberflächenbereich, und zumindest einer an dem ersten Oberflächenbereich und dem zweiten Oberflächenbereich entlang einer Kontaktlinie kontaktierend angeordneten erfindungsgemäßen Sensoreinheit, wobei eine Position des zweiten Oberflächenbereichs gegenüber dem ersten Oberflächenbereich anhand der mittels der Sensoreinheit ermittelten Krümmung der Kontaktlinie ermittelbar ist. Der Manipulator kann ein Softroboter sein.

Unter einem "Oberflächenbereich" wird insbesondere ein Teilbereich einer Oberfläche eines Objektes, hier ein Teilbereich einer Oberfläche des Manipulators, verstanden.

Vorteilhafterweise kann eine aktuelle Gestalt eines verformbaren Manipulators unter Verwendung der erfindungsgemäßen Sensoreinheit ermittelt werden.

Die Merkmale des zweiten und dritten Aspekts und die Vorteile entsprechen den Merkmalen und Vorteilen des erstgenannten Erfindungsaspektes.

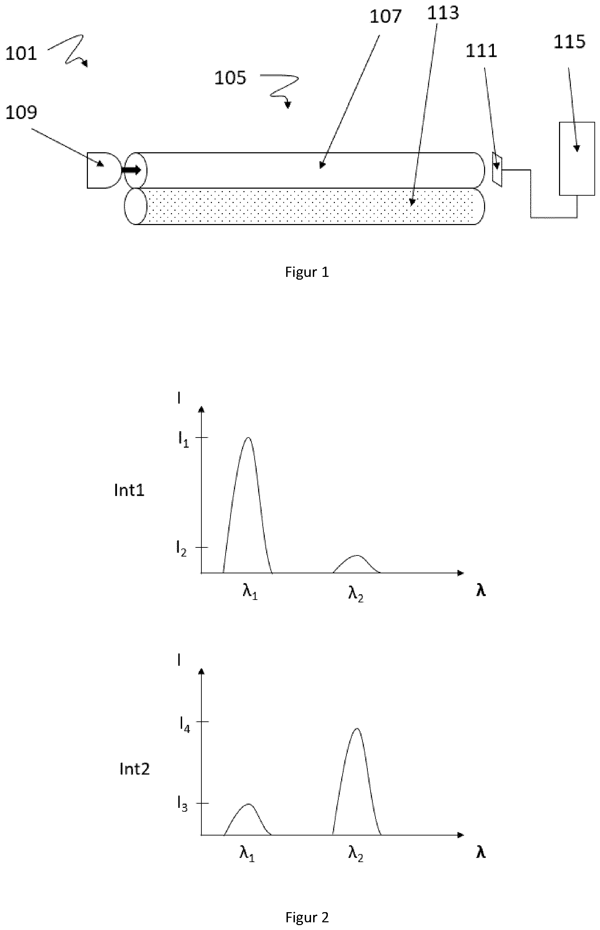

Im Weiteren wird die Erfindung anhand von Ausführungsbeispielen näher erläutert. Es zeigen
- Figur 1: eine schematische Darstellung eines ersten Deformationssensors,
- Figur 2: eine schematische Darstellung eines ersten und eines zweiten Spektrums,

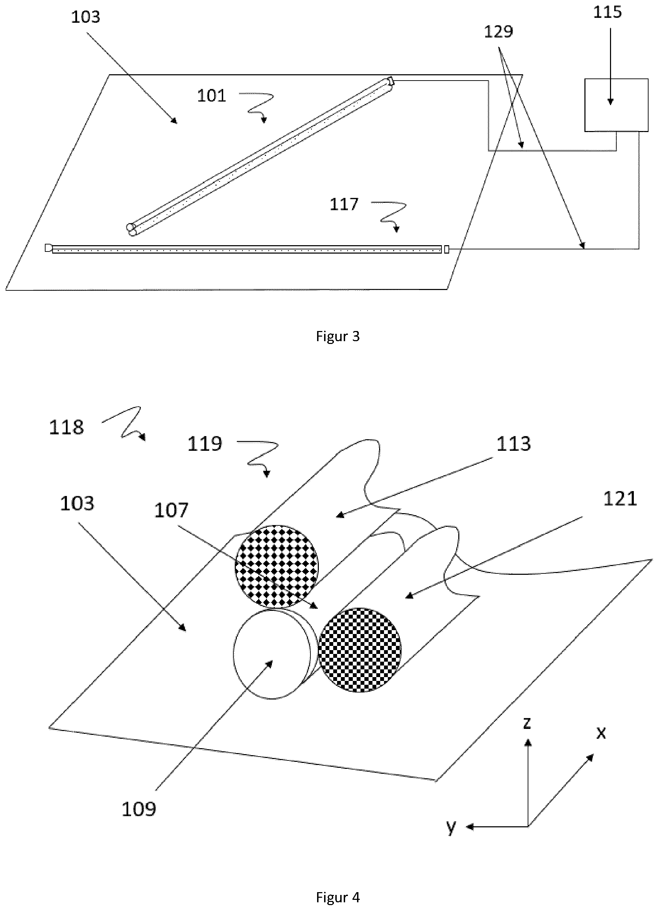

- Figur 3: eine schematische Darstellung eines Objektes mit zwei Deformationssensoren,
- Figur 4: eine schematische Darstellung eines dritten Deformationssensors,

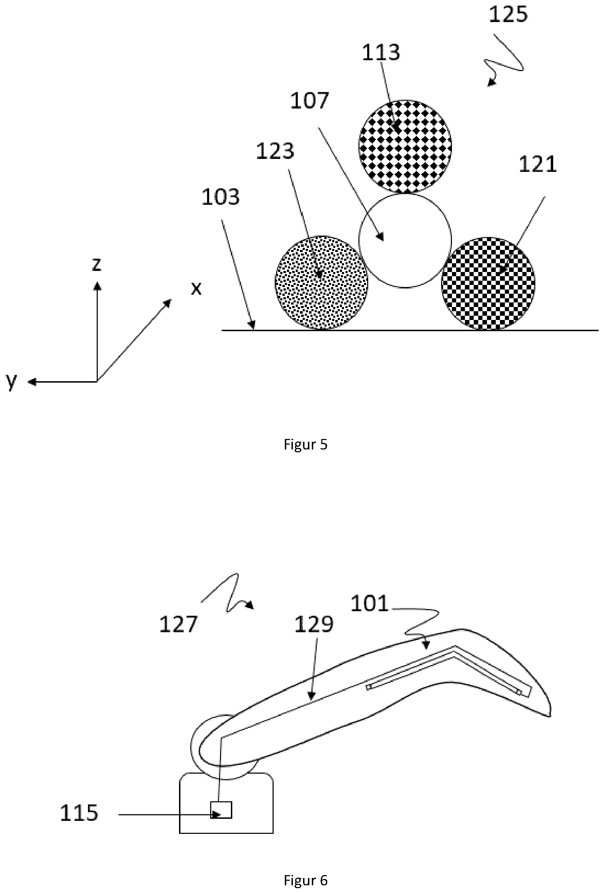

- Figur 5: eine schematische Darstellung eines vierten Deformationssensors in einer Schnittansicht, sowie
- Figur 6: einen Manipulator mit einem erfindungsgemäßen ersten Deformationssensor.

Ein erster Deformationssensor 101 weist eine erste Lichtleiteranordnung 105 auf. Die erste Lichtleiteranordnung 105 besteht aus einem ersten Lichtleiter 107 und einem zweiten Lichtleiter 113. Der zweite Lichtleiter 113 weist CdSe/CdS Quantenpunkte als wellenlängenänderndes Material auf. An einer ersten Stirnfläche des ersten Lichtleiters 107 ist eine Laserdiode 109 angeordnet, welche eine Faserkopplung aufweist, kabelgebunden (nicht dargestellt) mit elektrischer Energie versorgt wird und eine kohärente Lichtstrahlung in den ersten Lichtleiter 107 einbringt. Der erste Lichtleiter 107 liegt an dem zweiten Lichtleiter 113 an und ist entlang der Kontaktfläche mit diesem verklebt, sodass die von der Laserdiode 109 ausgesendete Strahlung in den zweiten Lichtleiter 113 übertritt und das hierin vorliegende wellenlängenändernde Material zum Emittieren anregt. An einer zweiten Stirnfläche des ersten Lichtleiters 107 ist ein Spektrometer 111 angeordnet, welches die eintreffende emittierte Anregungsstrahlung der Laserdiode 109 und die der Quantenpunkte detektiert und als ein Messignal an eine Auswerteeinheit 115 übermittelt.

Bei einer ersten Verformung des Objektes 103 zu einem ersten Zeitpunkt ergibt sich bei einer Anregungsstrahlung mit der ersten Wellenlänge λ₁ und mit einer ersten Intensität I₀ ein erstes, mittels des wellenlängensensitiven Spektrometers 111 des anliegenden ersten Deformationssensors 101 gemessenes, Spektrum Int₁. Dabei ist für die erste Wellenlänge λ₁ eine erste Intensität I₁ mittels des Spektrometers 111 ermittelt und für die zweite Wellenlänge λ₂ der emittierten Strahlung eine zweite Intensität I₂. Die für die jeweiligen Wellenlängen vorliegenden Intensitäten sind somit in dem ersten Spektrum Int₁ dargestellt. Bei einer zweiten Verformung des Objektes 103 zu einem zweiten Zeitpunkt und folglich bei der zweiten Verformung des ersten Deformationssensors 101 bei gleicher Anregungsstrahlung mit der ersten Wellenlänge λ₁ mit einer ersten Intensität I₀ ermittelt das Spektrometer 111 für die erste Wellenlänge λ₁ eine dritte Intensität I₃ und für die zweite Wellenlänge λ₂ der emittierten Strahlung die vierte Intensität I₄, welche zusammen das zweite Spektrum Int₂ ergeben. Anhand der gemessenen Spektren ermittelt die Auswerteeinheit 115 die zu dem ersten Zeitpunkt vorliegende und die zu dem zweiten Zeitpunkt vorliegende Verformung des Objektes 103.

Unter Verwendung eines ersten Deformationssensors 101 und eines zweiten Deformationssensors 117, welche in unterschiedlichen Orientierungen an einem Objekt 103 angeordnet sind, kann mittels der Auswerteeinheit 115 eine flächenmäßige Verformung des Objektes 103 ermittelt werden.

Ein dritter Deformationssensor 119 weist als zweite Lichtleiteranordnung 118 den ersten Lichtleiter 107, den zweiten Lichtleiter 113 und einen dritten Lichtleiter 121 sowie eine mit dem ersten Lichtleiter 107 in Verbindung stehende Laserdiode 109, ein Spektrometer 111 und eine Auswerteeinheit 115 auf. Der dritte Lichtleiter 121 weist einen organischen Farbstoff als wellenlängenänderndes Material auf. Der zweite Lichtleiter 113 ist in einer zwölf Uhr-Position an dem ersten Lichtleiter 107 anliegend und der dritte Lichtleiter 121 ist in einer drei Uhr-Position an dem ersten Lichtleiter 107 anliegend, welcher mit einer sechs Uhr-Position an dem Objekt 103 kontaktierend anliegt. Der dritte Deformationssensor 119 ist mittels eines additiven Herstellungsverfahrens einteilig hergestellt und an der Kontaktfläche mit dem Objekt 103 verklebt. Eine erste Emissionswellenlänge wird von dem zweiten Lichtleiter 113 emittiert und eine zweite Emissionswellenlänge wird von dem dritten Lichtleiter 121 emittiert.

Bei einer Biegung des Objektes 103 um eine y-Achse emittiert insbesondere der zweite Lichtleiter 113 die Emissionsstrahlung und bei einer Biegung des Objektes 103 um eine z-Achse oder z-Richtung emittiert insbesondere der dritte Lichtleiter 121 die Emissionsstrahlung. Mittels der Auswerteeinheit 115 kann anhand des aktuell gemessenen Spektrums eine Verformung des Objektes 103 im Wesentlichen in y- und z-Richtung sowie teilweise zudem in x-Richtung, auch mehrdimensionale oder flächige Krümmung genannt, ermittelt werden.

Ein vierter Deformationssensor 125 weist als dritte Lichtleiteranordnung 124 den ersten Lichtleiter 107, den zweiten Lichtleiter 113, den dritten Lichtleiter 121 und einen vierten Lichtleiter 123 sowie eine mit dem ersten Lichtleiter 107 in Verbindung stehende Laserdiode 109, ein Spektrometer 111 und eine Auswerteeinheit 115 auf. Der vierte Lichtleiter 123 weist Nanopartikel mit hochkonvertierenden Eigenschaften auf. Der zweite Lichtleiter 113, der dritte Lichtleiter 121 und der vierte Lichtleiter 123 sind im Wesentlichen sternförmig äquidistant über den Umfang des ersten Lichtleiters 107 verteilt an diesem angeordnet und an den Kontaktflächen mit dem ersten Lichtleiter 107 verklebt. Der vierte Lichtleiter 123 und der dritte Lichtleiter 121 liegen kontaktierend an dem Objekt 103 an. Eine Biegung des Objektes 103 wird mittelbar in den ersten Lichtleiter 107 und den zweiten Lichtleiter 113 sowie den dritten Lichtleiter 121 und den vierten Lichtleiter 123 eingeleitet. Die jeweilige Biegung des Objektes 103 in eine y- und z-Richtung sowie teilweise in eine x-Richtung induziert eine jeweilige Emittierung in dem zweiten Lichtleiter 113, dritten Lichtleiter 121 und vierten Lichtleiter 123, welche als Spektrum mittels des Spektrometers ermittelbar ist und an die Auswerteeinheit 115 signaltechnisch übermittelt wird. Anhand des Spektrums ermittelt die Auswerteeinheit 115 die vorliegende, richtungsspezifische Krümmung des Objektes 103 in x-, y- und z-Richtung, wobei das Ergebnis gegenüber einer Verwendung des dritten Deformationssensors 119 eine größere Genauigkeit aufweist.

Ein Softroboter 127weist einen ersten Deformationssensors 101 auf, welcher mittels eines Kabels 129 datenaustauschend mit einer Auswerteeinheit 115 verbunden ist. Eine Verformung einer Oberfläche des Softroboters 127 wird anhand der mittels des ersten Deformationssensors 101 ermittelten Messdaten von der Auswerteeinheit 115 ermittelt.

### Bezugszeichenliste

- 101: erster Deformationssensor
- 103: Objekt
- 105: erste Lichtleiteranordnung
- 107: erster Lichtleiter
- 109: Laserdiode
- 111: Spektrometer
- 113: zweiter Lichtleiter
- 115: Auswerteeinheit
- 117: zweiter Deformationssensor
- 118: zweite Lichtleiteranordnung
- 119: dritte Deformationssensor
- 121: dritter Lichtleiter
- 123: vierter Lichtleiter
- 124: dritte Lichtleiteranordnung
- 125: vierter Deformationssensor
- 127: Soft - Roboter
- 129: Kabel

- Int₁: erstes Spektrum
- Int₂: zweites Spektrum

- λ₁: erste Wellenlänge
- λ₂: zweite Wellenlänge

- I₁: erste Intensität
- I₂: zweite Intensität
- I₃: dritte Intensität
- I₄: vierte Intensität

## Patentansprüche

1. Sensoreinheit (101) zum Ermitteln einer ersten, im Wesentlichen eindimensionalen Krümmung eines Objektes (103), aufweisend eine Lichtleiterstruktur (105, 118, 124) mit einer an einer zweiten Position der Lichtleiterstruktur (105, 118, 124) angeordneten wellenlängensensitiven Messeinheit (111) und mit zumindest einem ersten Leitungsbereich (107), welcher an einer ersten Position eine Lichtquelle (109), welche eine Anregungsstrahlung in den ersten Leitungsbereich (107) induziert, aufweist, und mit einem an dem ersten Leitungsbereich (107) zumindest anliegenden, zweiten Leitungsbereich (113), welcher ein wellenlängenveränderndes Material aufweist, wobei der erste Leitungsbereich (107) und/oder der zweite Leitungsbereich (113) dem Objekt (103) physisch kontaktierend zugeordneten ist oder sind, wobei die wellenlängensensitive Messeinheit (111) sensordatenaustauschend mit einer Auswerteeinheit (115) verbunden ist, **dadurch gekennzeichnet, dass** die wellenlängensensitive Messeinheit (111) bei einer ersten Krümmung des Objektes (103) ein erstes Spektrum (Int₁) detektiert, welches einen ersten Anteil der Anregungsstrahlung und einen zweiten Anteil einer, in Abhängigkeit der ersten Krümmung und der Anregungsstrahlung, durch das wellenlängenverändernde Material emittierten Emissionsstrahlung aufweist, sodass mittels der Auswerteeinheit (115) unter Berücksichtigung der Anregungsstrahlung und des ersten Spektrums (Int₁) die erste Krümmung des Objektes (103) ermittelbar ist.

2. Sensoreinheit (101) nach dem vorstehenden Anspruch, wobei die wellenlängensensitive Messeinheit (111) spektralauflösend ist und als Monochromator, CCD-Kamera, Spektrometer und/oder zumindest eine Photodiode ausgeführt ist.

3. Sensoreinheit (101) nach einem der vorstehenden Ansprüche, wobei die von der Lichtquelle (109) ausgesendete Anregungsstrahlung kohärent ist und eine vordefinierte Wellenlänge, insbesondere eine Wellenlänge von 200 nm bis 2.000 nm, insbesondere 400 nm bis 800 nm nm, aufweist.

4. Sensoreinheit (101) nach einem der vorstehenden Ansprüche, wobei die erste Position an einem ersten Ende des ersten Leitungsbereich (107) angeordnet ist und/oder die zweite Position an einem dem ersten Ende gegenüberliegenden zweiten Ende des ersten Leitungsbereich (107) angeordnet ist.

5. Sensoreinheit (101) nach einem der vorstehenden Ansprüche, wobei der erste Leitungsbereich (107) und/oder der zweite Leitungsbereich (113) zumindest eine Faser aufweist, wobei die zumindest eine Faser in einem einzigen Faserstrang und/oder in einer Faserstranganordnung, welche eine Mehrzahl Faserstränge aufweist, wobei die Mehrzahl Faserstränge parallel zueinander und/oder in einer Schicht und/oder in einer Matrix angeordnet sind, vorliegt.

6. Sensoreinheit (101) nach einem der vorstehenden Ansprüche, wobei der erste Leitungsbereich (107) und/oder der zweite Leitungsbereich (113) einen makroskopisch deformierbaren und/oder transparenten Werkstoff, insbesondere transparentes Silikon aufweist.

7. Sensoreinheit (101) nach einem der vorstehenden Ansprüche, wobei der erste Leitungsbereich (107) und/oder der zweite Leitungsbereich (113) eine jeweilige Längserstreckung, welche deutlich größer als eine jeweilige Quererstreckung ist, aufweisen und ein Querschnitt des ersten Lichtleiters (107) und oder des zweiten Lichtleiters (113) im Wesentlichen rund, hexagonal, oval und/oder dreieckig ist.

8. Sensoreinheit (101) nach einem der vorstehenden Ansprüche, wobei die wellenlängensensitive Messeinheit (111) bei einer zweiten Auslenkung des Objektes (103) ein zweites Spektrum (Int₂) detektiert, welches einen dritten Anteil der Anregungsstrahlung und einen vierten Anteil einer in Abhängigkeit der zweiten Krümmung des Objektes (103) durch das wellenlängenveränderndes Material emittierten Emissionsstrahlung aufweist, sodass mittels der Auswerteeinheit (115) unter Berücksichtigung der Anregungsstrahlung und des zweiten Spektrums (Int₂) die zweite Krümmung des Objektes (103) ermittelbar ist.

9. Sensorsystem zum Ermitteln einer mehrdimensionalen Krümmung eines Objektes (103), aufweisend eine in einer ersten Orientierung an dem Objekt (103) kontaktierend angeordnete erste Sensoreinheit (101) nach einem der Ansprüche 1 bis 8 und zweite, in einer zweiten Orientierung an dem Objekt (103) kontaktierend angeordnete zweite Sensoreinheit (117) nach einem der Ansprüche 1 bis 8, wobei eine Auswerteeinheit (115) sensordatenaustauschend mit der ersten Sensoreinheit (101) und der zweiten Sensoreinheit (117) verbunden ist, wobei die Auswerteeinheit (115) dazu eingerichtet ist, die mehrdimensionale Krümmung des Objektes (103) anhand der für die erste Orientierung von der ersten Sensoreinheit (101) ermittelten ersten Krümmung des Objektes (103) und der für die zweite Orientierung von der zweiten Sensoreinheit (117) ermittelten zweiten Krümmung des Objektes (103) abzuleiten.

10. Manipulator (119) mit zumindest einem ersten, gegenüber einem zweiten Oberflächenbereich (123) beweglich angeordneten, Oberflächenbereich (121), und zumindest einer an dem ersten Oberflächenbereich (121) und dem zweiten Oberflächenbereich (123) entlang einer Kontaktlinie kontaktierend angeordneten Sensoreinheit (101) nach einem der Ansprüche 1 bis 8, wobei eine Position des zweiten Oberflächenbereichs (123) gegenüber des ersten Oberflächenbereichs (121) anhand der mittels der Sensoreinheit (101) ermittelten Krümmung der Kontaktlinie ermittelbar ist.
